# FASCICULE DE BREVET EUROPEEN

(11) **EP 3 125 413 B1**
(45) Date de publication et mention de la délivrance du brevet: **12.12.2018**
(21) Numéro de dépôt: 16179865.7
(22) Date de dépôt: 18.07.2016
(51) Int. Cl.: H02K 21/22, H02K 1/18, H02K 5/173, H02K 11/22

(54) **MOTEUR ÉLECTRIQUE A COMMUTATION ÉLECTRONIQUE ET DISPOSITIF DE PULSION D'AIR CORRESPONDANT**
ELEKTROMOTOR MIT ELEKTRONISCHER SCHALTUNG, UND ENTSPRECHENDE DRUCKLUFTVORRICHTUNG
ELECTRIC MOTOR WITH ELECTRONIC SWITCHING AND CORRESPONDING AIR-PULSING DEVICE

(30) Priorité: 28.07.2015 FR 1557179
(43) Date de publication de la demande: 01.02.2017
(73) Titulaire: VALEO SYSTEMES THERMIQUES, 78320 Le Mesnil Saint-Denis (FR)
(72) Inventeur: CAPOULUN, Geoffroy, 78000 VERSAILLES (FR); FARKH, Alain, 78490 MONTFORT L'AMAURY (FR)
(74) Mandataire: Metz, Gaëlle

(56) Documents cités:
- WO-A2-2013/098309
- FR-A1- 2 679 076
- GB-A- 2 092 834

## Description

La présente invention se rapporte au domaine des moteurs électriques, et notamment à celui des moteurs à commutation électronique. Plus spécifiquement, l'invention concerne des dispositifs de pulsion d'air dans des véhicules automobiles comportant de tels moteurs électriques.

Un dispositif de pulsion d'air équipé d'un moteur électrique selon l'invention est, par exemple, utilisé dans un système de ventilation, de chauffage et/ou de climatisation d'un véhicule automobile.

Les moteurs électriques à commutation électronique, ou moteurs à courant continu sans balai (connu également sous la dénomination anglaise de « brushless »), comportent un ensemble rotor et stator, chacun de ces composants étant porteur d'éléments électromagnétiques dont l'interaction génère le déplacement du rotor relativement au stator. Le rotor et le stator sont montés indépendamment l'un de l'autre dans ledit moteur, et il convient de s'assurer que le positionnement relatif de ces deux composants est correct pour un fonctionnement optimal du moteur. Par ailleurs, la commutation de courant dans les bobines du stator génère des ondes électromagnétiques qui peuvent perturber le fonctionnement d'autres appareils électroniques disposés à proximité.

La présente invention s'inscrit dans ce contexte et elle vise à proposer un moteur électrique et un dispositif de pulsion d'air associé qui permettent de limiter la propagation d'ondes électromagnétiques hors du dispositif de pulsion d'air.

Par dispositif de pulsion d'air, on entend un dispositif permettant d'aspirer et/ou de souffler de l'air.

Un dispositif de pulsion d'air comporte un moteur électrique à commutation électronique, qui comporte un rotor et un stator. Le moteur électrique peut notamment comporter une roue de ventilation entraînée en rotation par un arbre de sortie du moteur, et le rotor, adapté pour tourner autour du stator, peut notamment être solidaire en rotation de l'arbre de sortie.

Le stator présente une pluralité de dents agencées radialement en étoile autour d'un axe longitudinal de manière à ce qu'une zone de passage pour l'enroulement d'une bobine magnétique autour de chacune des dents soit formée entre deux dents voisines.

Selon l'invention, le stator est en contact avec un moyen support du moteur électrique, ledit moyen support étant métallique et connecté électriquement à une masse électrique. En outre, au moins un écran est relié électriquement au moyen support, ledit au moins un écran comportant des moyens de fermeture qui s'étendent le long de l'axe longitudinal pour combler au moins une desdites zones de passage entre deux dents du stator.

Cet agencement permet la formation d'une enceinte conductrice reliée à la masse électrique, et donc maintenue à un potentiel fixe, de manière à former un blindage électromagnétique apte à confiner à l'intérieur du dispositif de pulsion d'air le champ électrique créé par la commutation de courant dans les bobines du stator.

Selon une première série de caractéristiques, prises seules ou en combinaison, on pourra prévoir que :
- l'écran s'étend transversalement entre le rotor et le stator ;
- l'écran s'étend sur toute la surface du stator ;
- l'écran présente une forme annulaire sensiblement plane, qui peut notamment être percée en son centre pour être traversée par l'arbre de sortie moteur ;
- les moyens de fermeture comportent des pattes prolongeant sensiblement perpendiculairement le bord délimitant la périphérie dudit écran ;
- les pattes s'étendent sur une hauteur sensiblement égale à la hauteur des zones de passage du stator ;
- les pattes sont régulièrement disposées sur tout le pourtour de l'écran ;
- le nombre de pattes sur l'écran est égal au nombre de zones de passage sur le stator ;
- l'écran est fixé sur le stator.

Avantageusement, l'écran tel que décrit ci-dessus est un premier écran formant partie d'une couverture du stator comportant en outre un deuxième écran, disposé en couverture du stator du côté axial du stator opposé au côté couvert par ledit premier écran, entre ledit stator et le moyen support, ledit deuxième écran étant également relié électriquement au moyen support et à la masse électrique.

Dans ce contexte, on peut prévoir que :
- le deuxième écran s'étend transversalement à l'arbre de sortie moteur ;
- le deuxième écran s'étend sur toute la surface du stator ;
- le deuxième écran présente une forme annulaire sensiblement plane, qui peut notamment être percée en son centre pour être traversée par l'arbre de sortie moteur ;
- les moyens de fermeture prolongent sensiblement perpendiculairement le bord délimitant la périphérie du deuxième écran ;
- le deuxième écran est fixé sur le stator ;
- le deuxième écran s'étend axialement, entre le stator et ledit moyen support ;
- le deuxième écran s'étend sensiblement dans le prolongement des plaques portées en périphérie dudit stator ;
- le deuxième écran présente une forme de couronne annulaire ;
- les moyens de fermeture s'étendent sensiblement axialement dans la continuité de la paroi formant ladite couronne annulaire ;
- le deuxième écran est fixé sur le moyen support ;
- les moyens de fermeture sont portés par le premier écran et par le deuxième écran ; soit les moyens de fermeture portés par le premier écran s'étendent en regard des moyens de fermeture portés par le deuxième écran, lesdits moyens de fermeture s'étendant sur une dimension axiale légèrement inférieure à la moitié de la dimension axiale du stator ; soit les deux écrans sont agencés par rapport au stator de manière à ce que les zones de passage entre les dents du stator soient comblés alternativement par un moyen de fermeture porté par le premier écran et par un moyen de fermeture porté par le deuxième écran, lesdits moyens de fermeture s'étendant sur une dimension axiale sensiblement égale à la dimension axiale du stator ;
- les deux écrans présentent des moyens de mise à la masse communs ;
- les moyens de mise à la masse communs sont formés par au moins une vis de fixation traversant le stator, au contact d'au moins le deuxième écran et le premier écran, pour venir en prise dans le moyen support ;
- le premier écran et/ou le deuxième écran sont réalisés en un matériau conducteur électriquement, qui peut être à titre d'exemple de l'aluminium ;
- l'arbre de sortie du moteur est monté à rotation à l'intérieur du moyen support par l'intermédiaire de paliers de roulement ;
- dans le cas où ledit moyen support présente la forme d'une platine et notamment d'un fût disposé en saillie de la platine et autour duquel peut être monté le stator, la platine du moyen support forme un dissipateur thermique porteur d'une carte électronique de commande, notamment de l'alimentation des bobines du stator ;
- le rotor, agencé autour du stator, est porteur d'au moins un aimant permanent dont l'interaction avec lesdites bobines alimentées en courant génère un mouvement de rotation du rotor autour du stator.

L'invention concerne également un système de chauffage, de ventilation et/ou de climatisation d'un véhicule automobile comprenant au moins un dispositif de pulsion d'air conforme à ce qui a été décrit précédemment.

D'autres caractéristiques et avantages de l'invention apparaîtront à la lecture de la description détaillée d'un mode de réalisation qui va suivre et pour la compréhension de laquelle on se reportera aux dessins annexés parmi lesquels :
- la figure 1 est une représentation éclatée en perspective d'un dispositif de pulsion d'air selon l'invention ;
- la figure 2 illustre schématiquement un dispositif de pulsion d'air comportant selon l'invention des moyens de confinement axiaux des rayonnements électromagnétiques et des moyens de fermeture de zones de passage entre les dents du stator visibles sur la figure 1 ;
- la figure 3 est une vue en perspective d'un stator équipant un moteur électrique dans un dispositif de pulsion d'air selon l'invention, et d'un écran formant moyen de confinement axial, ledit écran portant des moyens de fermeture selon l'invention aptes à être logés dans les zones de passage entre les dents du stator ;

- la figure 4 est une vue similaire à celle de la figure 3 dans laquelle l'écran a été assemblé sur le stator, les moyens de fermeture étant logés dans les zones de passage entre les dents du stator ;
- la figure 5 illustre schématiquement un dispositif de pulsion d'air comportant selon un mode de réalisation particulier de l'invention des moyens de confinement axiaux à deux écrans, disposés de part et d'autre du stator ;
- la figure 6 est une vue en perspective d'un stator et des moyens de confinement axiaux à deux écrans, selon la figure 5 ;
- la figure 7 illustre schématiquement un dispositif de pulsion d'air comportant des moyens de confinement axiaux, à deux écrans, de ces mêmes rayonnements selon une variante de réalisation, et
- les figures 8 et 9 sont des représentations d'éléments formant le stator d'un dispositif de pulsion d'air, à savoir une tôle (figure 8) et un carter surmoulé sur un empilement de ces tôles (figure 9).

Un dispositif de pulsion d'air 1, qui permet d'aspirer et de souffler de l'air, comporte au moins un moteur électrique à commutation électronique 2, qui peut notamment être apte à entraîner en rotation une roue de ventilation 4, de type ici à ailettes 6, par l'intermédiaire d'un arbre de sortie 8 du moteur électrique. Le dispositif peut comporter en outre au moins un moyen support 10 intégrant plusieurs fonctions parmi lesquelles le support du moteur électrique 2, le refroidissement des composants dudit dispositif et le support d'une carte électronique de commande 12 dudit moteur électrique.

Le moteur électrique comporte principalement un stator 14 inducteur et un rotor 16 induit, porteur de l'arbre de sortie 8 apte à entraîner la roue de ventilation 4. Le stator 14 est rendu solidaire du moyen support 10 du moteur électrique, et le rotor 16 est agencé autour du stator 14 pour être entraîné en rotation sous l'effet des champs magnétiques générés par le bobinage et les aimants associés au rotor et au stator.

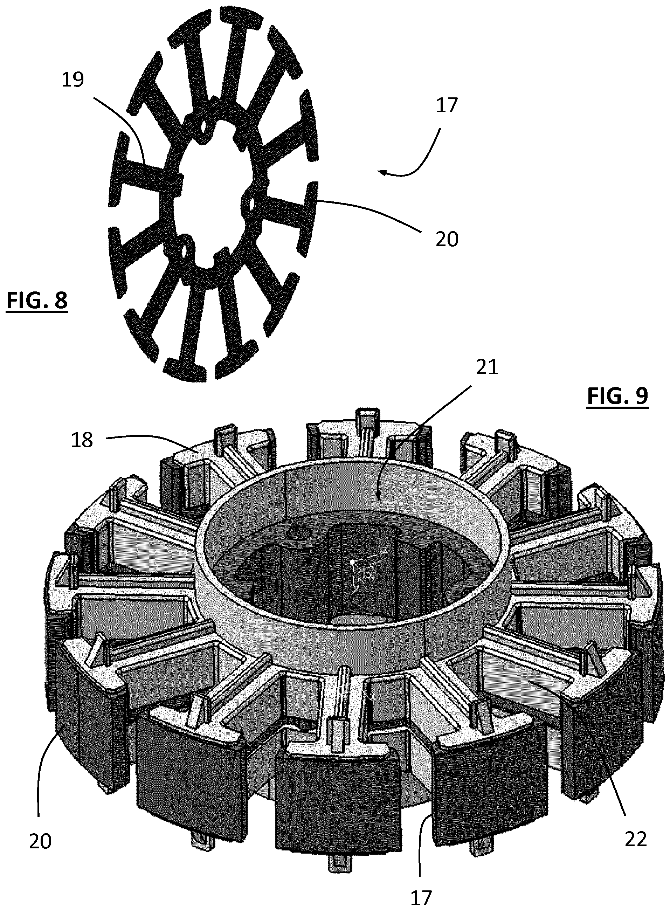

Le stator 14 présente une forme de révolution autour d'un axe longitudinal principal, sensiblement parallèle à l'axe de rotation du rotor. Le stator comporte un empilement de tôles 17 (une tôle étant visible en figure 8) et un carter 18 venant recouvrir ce dernier, ledit carter étant réalisé en matière plastique. Les tôles 17 du stator sont empilées selon l'axe principal de révolution, chaque plaque de tôle apte à être empilée présentant la forme de branches 19 disposées en étoile autour d'un anneau central et prolongées à leur extrémité libre par une barre 20 perpendiculaire à ladite branche.

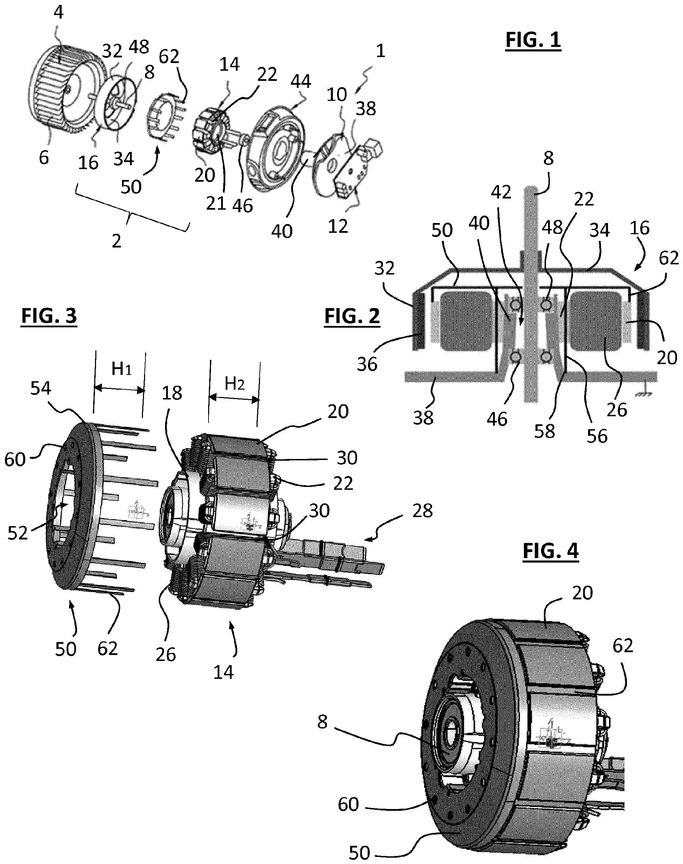

Le carter 18 du stator, visible en détail sur la figure 9, est formé de deux coques rapportées de part et d'autre de l'empilement de tôles et présentant chacune une paroi centrale annulaire qui délimite le contour d'un alésage interne 21, et dont la face externe est prolongée par une pluralité de dents 22 agencées radialement en étoile. On comprend que le carter est surmoulé sur l'empilement de tôles de sorte que les dents du carter recouvrent les branches des tôles, les barres des tôles dépassant à l'extrémité radiale libre des dents. Le stator 14 comporte un bobinage d'excitation composé de plusieurs phases, comportant chacune au moins un enroulement de fil 26, dont les sorties sont raccordées électriquement à des moyens d'alimentation ici non représentés (seuls les moyens de raccordement 28 étant visibles notamment sur la figure 3).

Dans un mode de réalisation particulier, le stator comporte douze dents bobinées en triphasé. L'enroulement de fil est réalisé autour des dents, chaque dent portant un élément de bobinage. Et tel qu'illustré, les empilements de tôles 17 débouchant à l'extrémité radiale libre du carter sont dimensionnés pour prévoir une zone de passage 30 entre chacune des dents 22 apte à laisser la place nécessaire pour réaliser l'enroulement du fil autour des dents.

Le rotor 16 présente une forme de cloche, avec une couronne annulaire 32 et une paroi de fermeture 34 disposée à une extrémité de ladite couronne. La paroi de fermeture peut prendre une forme plane sensiblement perpendiculaire à l'axe de la couronne ou bien une forme incurvée en dégagement de la couronne, et elle porte en son centre l'arbre de sortie moteur 8.

La couronne 32 présente un diamètre supérieur au diamètre extérieur du stator, de sorte que le rotor peut venir en recouvrement du stator. La couronne présente une face interne qui est tournée vers le stator dans cette position de recouvrement, et au moins un aimant permanent 36 est disposé sur cette face interne de la couronne du rotor.

Lorsque le moteur est assemblé, le stator 14 est disposé dans le corps du rotor 16 délimité par la couronne 32. Le rotor et le stator sont ainsi agencés pour que l'aimant permanent 36 porté par le rotor 16 soit constamment disposé dans le champ magnétique généré par les bobines du stator 14 lorsque celles-ci sont alimentées en courant, de manière à générer un mouvement de rotation du rotor autour du stator.

Dans le dispositif de pulsion d'air 1 comportant le moteur électrique 2 selon l'invention, le stator 14 et le rotor 16 sont agencés de sorte que la paroi de fermeture 34 du rotor est tournée vers la roue de ventilation 4 et que le stator 14 est disposé en regard du moyen support 10. Ce dernier présente ici la forme d'une platine 38 et d'un fût 40 disposé en saillie de la platine et présentant un canal interne 42 débouchant sensiblement au centre de la platine, et ce moyen support est fixé par rapport à la structure du véhicule, ici par l'intermédiaire d'un bâti 44 illustré sur la figure 1.

La platine 38 s'étend dans un plan sensiblement perpendiculaire à l'axe de révolution du canal interne du fût 40. Le fût, sensiblement cylindrique, est apte à être logé dans l'alésage interne 21 du stator 14 et à recevoir l'arbre de sortie moteur 8 solidaire du rotor 16, de sorte que l'on comprend que ce moyen support 10 assure le positionnement correct du rotor 16 par rapport au stator 14. On peut observer sur les figures 1, 2, 5 et 7 que le fût 40 et la platine 38 forment une pièce monobloc, étant entendu que le moyen support est monobloc dès lors que la séparation du fût et de la platine entraîne une destruction de l'un ou l'autre de ces composants. La platine 38 présente sur les figures une forme discoïdale, mais on comprend que celui-ci peut prendre d'autres formes, par exemple rectangulaire, carrée, elliptique, etc.

La platine 38 du moyen support forme un dissipateur thermique porteur d'une carte électronique de commande 12, notamment de l'alimentation des bobines du stator. La carte électronique de commande est disposée sur la face de la platine 38 orientée à l'opposé du fût 40.

De façon préférentielle, le moyen support 10 est en métal et il peut être couplé thermiquement au dispositif par l'intermédiaire d'une pâte thermique. Ainsi, la platine 38 faisant office de dissipateur thermique peut refroidir efficacement l'organe électronique par conduction thermique. De plus, le fait que le moyen support soit réalisé en métal et relié à la masse de l'organe électronique permet de bloquer des rayonnements électromagnétiques émis par l'organe électronique, ces rayonnements pouvant perturber le fonctionnement du moteur électrique. En outre, le fait que le moyen support soit en métal permet de relier le stator 14 à la masse par l'intermédiaire du moyen support 10. En effet, la platine 38 du moyen support 10 est fixée par rapport à la structure du véhicule, via ici le bâti 44, de sorte que le moyen support est considéré comme relié électriquement à la terre. Préférentiellement, le moyen support est en aluminium, de telle sorte que l'on associe pour cette pièce des caractéristiques de légèreté et de bonne conduction thermique.

Tel que cela est notamment visible sur les figures 2, 5 et 7, le stator 14 est figé sur le moyen support 10 et le rotor 16 est agencé pour tourner autour du stator 14. Notamment, le stator est disposé autour du fût 40, en étant au contact de la face externe du fût, tandis que le rotor 16 est reçu, par l'intermédiaire de l'arbre de sortie 8 dont il est solidaire, dans le canal interne 42 du fût. L'alimentation électrique des fils de bobine crée des champs magnétiques, qui forcent la rotation du rotor entraîné sous l'effet de l'aimant permanent 36 qu'il porte. Il en résulte un entraînement de l'arbre de sortie 8 du moteur qui tel qu'illustré est porté par le rotor 16 et qui est monté à rotation à l'intérieur du fût 40 du moyen support par l'intermédiaire de roulements.

Deux roulements 46, 48 sont insérés dans le moyen support 10 pour servir de guide de rotation à l'arbre de sortie 8 du moteur entraîné par ailleurs en rotation par le rotor 16. Ces roulements peuvent être des roulements à billes, tel qu'illustré schématiquement, mais on comprendra qu'ils pourraient prendre la forme de roulements à rouleaux, à aiguilles, ou autres...

La roue de ventilation 4 du dispositif de pulsion d'air 1 est rendu solidaire de l'extrémité libre de l'arbre de sortie 8 du moteur qui s'étend à l'opposé du stator 14 et du moyen support 10, et elle comporte, disposées à sa périphérie, une pluralité d'ailettes 6. La rotation du rotor entraîne en rotation la roue qui contribue à produire de l'air pulsé par l'intermédiaire des ailettes.

Il est particulièrement notable selon l'invention que le moteur électrique 2 formé par le rotor 16 et le stator 14 comporte en outre des moyens de confinement pour éviter la propagation des rayonnements électromagnétiques à l'extérieur du moteur et du dispositif de pulsion d'air.

Notamment le moteur comporte des moyens de confinement radiaux, c'est-à-dire des moyens permettant de limiter la propagation de ces rayonnements électromagnétiques sensiblement perpendiculairement à l'axe longitudinal de l'arbre de sortie du moteur.

La face interne de la paroi annulaire centrale dudit stator est en contact avec le fût 40 agencé en saillie de la platine 38, étant entendu que la pièce monobloc formée par le fût 40 et la platine 38 est métallique et reliée à une masse électrique. Il en résulte que les tôles 17 métalliques sont portées à la masse électrique et que les barres 20 disposées radialement à l'extrémité libre des tôles forment les moyens de limitation des rayonnements électromagnétiques.

Afin que ces moyens de confinement radiaux soient efficaces, il convient de s'assurer de la correcte connexion à la masse électrique des tôles 17 et donc s'assurer du bon contact entre le stator 14 et le moyen support 10. On pourra par exemple prévoir que l'alésage interne 21 du stator présente une forme tronconique, et que le profil externe du fût 40 du moyen support sur lequel vient s'emmancher le stator 14 présente également une forme tronconique correspondante. De la sorte, on s'assure d'un contact sur toute la périphérie du fût lors de l'emmanchement du stator sur le moyen support.

Par ailleurs, les moyens de confinement des rayonnements électromagnétiques selon l'invention peuvent être des moyens de confinement axiaux et comporter au moins un écran additionnel réalisé dans un matériau conducteur, notamment en aluminium, et relié électriquement à la masse. On peut notamment prévoir de disposer un tel écran d'un côté ou de l'autre du stator 14, ou des deux côtés.

Sur les figures 2 et 3, un premier écran 50 est disposé transversalement à l'arbre de sortie 8, entre le stator 14 et le rotor 16. Afin de former un moyen de confinement efficace, le premier écran 50 s'étend transversalement sur tout le diamètre du stator.

Tel qu'illustré sur la figure 3, on peut prévoir que le premier écran 50 présente une forme annulaire sensiblement plane, percée en son centre d'un alésage 52 pour être traversé par l'arbre de sortie du moteur qui s'étend entre le rotor et le stator et pour permettre un passage d'air nécessaire au refroidissement des bobines du moteur. Le premier écran 50 peut présenter, en prolongement de son bord périphérique 54, un bord tombé régulier sur tout le pourtour du premier écran.

Le premier écran 50 est fixé sur le stator 14. Les moyens de fixation prévus, par vissage, permettent en outre la mise à la masse de ce premier écran 50 sur la platine 38. Il est ainsi prévu d'utiliser les vis de fixation 56 pour la mise à la masse du premier écran 50, cette mise à la masse étant nécessaire pour que le premier écran soit apte à limiter la propagation des rayonnements électromagnétiques. Tel que cela est visible sur la figure 2, au moins une des vis de fixation 56 traverse à cet effet le stator 14 pour venir en prise de l'autre côté du stator, sur la platine 38, dans un trou taraudé 58. La connexion électrique de l'écran et sa mise à la masse se fait par l'intermédiaire de la platine 38 métallique, de la au moins une vis de fixation métallique 56 en prise dans la platine, et du contact entre l'écran et la tête de vis.

Sur les figures 3 et 4, on a rendu visible le fait que le premier écran 50 peut être percé axialement d'orifices d'aération 60 répartis circulairement, et régulièrement espacés les uns des autres. Notamment dans la configuration illustrée dans laquelle le stator 14 et le premier écran 50 sont agencés de sorte que ces orifices d'aération s'étendent au droit des zones de passage 30 et des espaces laissés entre les dents bobinées du stator, cela permet de refroidir efficacement les moyens électromagnétiques portés par le rotor 16 et le stator 14.

Le premier écran 50 comporte avantageusement des pattes 62 prolongeant sensiblement perpendiculairement le bord périphérique de l'écran. Ces pattes s'étendent sur une hauteur H1, telle qu'identifiée sur la figure 3, et elles sont régulièrement disposées sur tout le pourtour de l'écran. Ces pattes 62 forment des moyens de fermeture des zones de passage 30 formées dans le stator entre deux dents 22 voisines. Lorsque le premier écran est assemblé sur le stator, les pattes viennent se loger dans ces zones de passage et elles affleurent avec les barres métalliques 20 s'étendant en saillie des dents 22 voisines de manière à former une surface périphérique du stator sensiblement continue. La hauteur H1 des pattes correspond sensiblement à la hauteur H2 de l'empilement de tôles, telle qu'identifiée sur la figure 3, et la largeur des pattes est légèrement inférieure à la largeur des zones de passage, afin que chacune des pattes puisse être insérée dans une zone de passage respective. On prévoit autant de pattes 62 sur l'écran qu'il y a de zones de passage 30 sur le stator. Les pattes de fermetures 62 sont avantageusement guidées et maintenues en place par les coques formant le carter 18 et surmoulées sur l'empilement de tôles, afin d'être correctement implantées et de combler intégralement les zones de passage correspondantes.

On comprend que ces moyens de fermeture formés par les pattes viennent améliorer le confinement radial des rayonnements électromagnétiques, en formant une cloison sensiblement continue sur tout le pourtour du stator, chaque élément de cette cloison, que ce soit les barres 20 de l'empilement de tôles ou les pattes 62, étant porté à la masse électrique tel que cela a été précisé précédemment. Il est particulièrement intéressant selon l'invention que ces moyens de complément du confinement radial de rayonnements électromagnétiques soient portés par des moyens assurant le confinement axial de ces mêmes rayonnements.

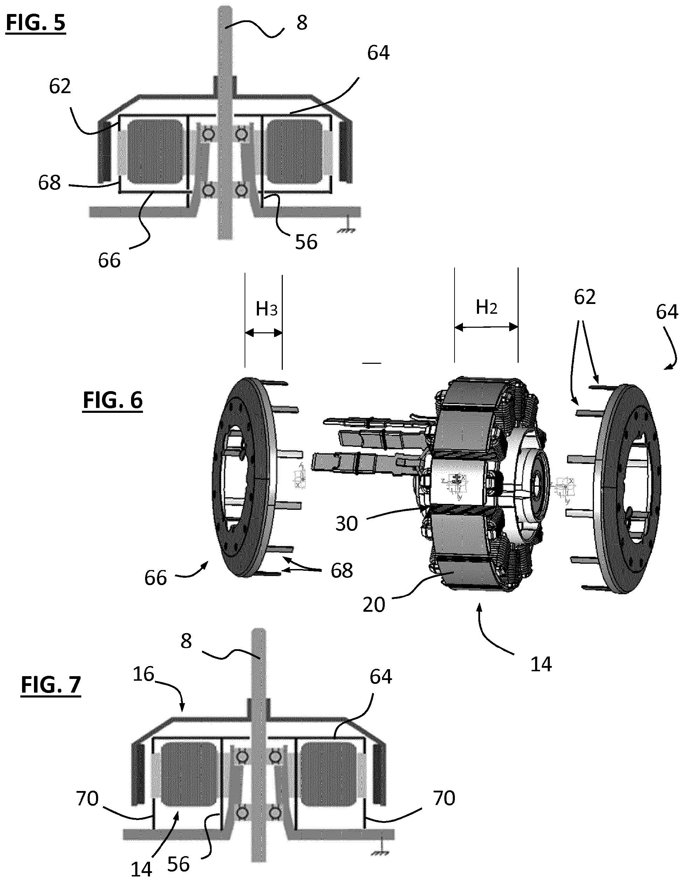

On va maintenant décrire, notamment en se référant aux figures 5 à 7, des modes de réalisation particuliers en ce que l'on prévoit deux écrans pour former une couverture plus efficace du stator. Un premier écran 64 est disposé en couverture du stator 14 tel que cela a été précisé précédemment, entre le rotor 16 et le stator 14, et un deuxième écran est disposé du côté axial du stator 14 opposé au côté couvert par ledit premier écran 64, c'est-à-dire entre ledit stator 14 et la platine 38. Ce deuxième écran est également en aluminium comme le premier écran.

Du fait de la présence de la platine, ce deuxième écran peut présenter plusieurs variantes. Dans une première variante, illustrée sur les figures 5 et 6, le deuxième écran 66 s'étend transversalement à l'axe de l'arbre de sortie moteur et il présente une forme similaire à celle du premier écran décrit précédemment, en étant son symétrique par rapport au stator. De la sorte, le deuxième écran 66 s'étend radialement sur tout le diamètre du stator, et il comporte des deuxièmes pattes 68 qui prolongent perpendiculairement le bord périphérique de l'écran. Tel qu'illustré sur la figure 5, on prévoit autant de deuxièmes pattes 68 sur le deuxième écran qu'il y a de zones de passage 30 dans le stator. Et chacune de ces pattes s'étend sur une hauteur H3, telle qu'identifiée sur la figure 6, sensiblement égale à la moitié de la hauteur H2, et l'on prévoit que les pattes 62 du premier écran 50 s'étendent sur la même hauteur H3 que celle des deuxièmes pattes 68 du deuxième écran. Ainsi, on comprend que lors de l'assemblage des écrans autour du stator, une patte 62 du premier écran et une deuxième patte 68 du deuxième écran viennent dans une zone de passage 30, en fermant chacune une moitié de ladite zone.

En variante non représentée, il pourrait être prévu que les pattes 62 du premier écran 50 et les deuxièmes pattes 68 du deuxième écran s'étendent chacune sur une hauteur H1 équivalente à la hauteur des zones de passage, et que le nombre de pattes du premier écran, ainsi que le nombre de pattes du deuxième écran, soit de moitié celui des zones de passage du stator, les pattes du premier et du deuxième écran venant en alternance remplir les zones de passage 30.

Au moins une des vis de fixation 56 permet la mise à la masse, par exemple à un même potentiel électrique sensiblement nul de la platine 38, du premier écran 50 et du deuxième écran 66. La présence de deux écrans permet d'assurer un confinement axial optimal des rayonnements électromagnétiques et cela peut permettre de prévoir des pattes de fermeture radiales du stator qui soient plus robustes, car moins hautes.

Dans une deuxième variante, illustrée sur la figure 7, le deuxième écran 70 peut s'étendre axialement, sensiblement dans le prolongement des plaques 24 portées en périphérie dudit stator 14, le deuxième écran 70 présentant alors une forme de couronne annulaire. Dans ce cas, il est possible de fixer le deuxième écran soit sur le stator 14, soit sur la platine 38. La fixation du deuxième écran 70 sur la platine 38 peut notamment se faire alors par des secondes vis de fixation qui coopèrent avec des alésages taraudés correspondants dans des fûts secondaires agencés en saillie de la platine autour du fût. Des pattes de fixation, prolongeant perpendiculairement la couronne, assurent la fixation du deuxième écran et la mise à la masse.

La description qui précède vise à expliquer comment l'invention permet d'atteindre les objectifs qu'elle s'est fixés et notamment de proposer un dispositif de pulsion d'air qui limite la propagation des rayonnements électromagnétiques, par l'élaboration de moyens de confinement simples à fabriquer, simples à monter et particulièrement efficaces. Il est notable qu'un confinement est rendu possible dans toutes les directions, avec aussi bien un confinement radial qu'un confinement axial, les moyens de confinement axiaux portant des moyens de confinement radiaux complémentaires de ceux prévus par ailleurs. Il convient de noter que l'invention n'est pas limitée aux seuls dispositifs de pulsion d'air conformes aux modes de réalisation explicitement décrits en regard des figures 1 à 7. A titre d'exemple, on pourra, sans sortir du cadre de l'invention, modifier la forme de l'écran dès lors qu'il forme bien une partie d'un caisson fermant de façon étanche au moins un côté du stator.

## Revendications

1. Dispositif de pulsion d'air comportant un moteur électrique (2) à commutation électronique, ledit moteur comportant un rotor (16) et un stator (14), dans lequel ledit stator (14) présente une pluralité de dents (22) agencées radialement en étoile autour d'un axe longitudinal de manière à ce qu'une zone de passage (30) pour l'enroulement d'une bobine magnétique autour de chacune des dents soit formée entre deux dents voisines,
le stator est en contact avec un moyen support (10) du moteur électrique, ledit support étant métallique et connecté électriquement à une masse électrique, et au moins un écran (50, 64, 66, 70) est relié électriquement au moyen support (10), ledit au moins un écran comportant des moyens de fermeture (62, 68) qui s'étendent le long de l'axe longitudinal pour combler au moins une desdites zones de passage entre deux dents du stator,
caractérisé en se que: ledit écran (50, 64) s'étend transversalement à l'axe longitudinal entre le rotor (16) et le stator (14).

2. Dispositif de pulsion d'air selon la revendication précédente, **caractérisé en ce que** ledit écran (50, 64) s'étend sur toute la surface du stator (14).

3. Dispositif de pulsion d'air selon l'une des revendications précédentes, **caractérisé en ce que** ledit écran (50, 64, 66) présente une forme annulaire sensiblement plane.

4. Dispositif de pulsion d'air selon l'une des revendications précédentes, **caractérisé en ce que** l'écran est percé en son centre d'un alésage (52) pour être traversé par un arbre de sortie (8) du moteur.

5. Dispositif de pulsion d'air selon la revendication précédente, **caractérisé en ce qu'**une roue de ventilation (4) est rendue solidaire de l'extrémité libre de l'arbre de sortie (8) du moteur qui s'étend à l'opposé du stator (14) et du moyen support (10).

6. Dispositif de pulsion d'air selon l'une des revendications précédentes, **caractérisé en ce que** lesdits moyens de fermeture comportent des pattes (62) prolongeant sensiblement perpendiculairement le bord délimitant la périphérie dudit écran (50, 64).

7. Dispositif de pulsion d'air selon la revendication précédente, **caractérisé en ce que** les pattes (62) s'étendent sur une hauteur sensiblement égale à la hauteur des zones de passage (30) du stator (14).

8. Dispositif de pulsion d'air selon la revendication précédente, **caractérisé en ce que** les pattes (62) sont régulièrement disposées sur tout le pourtour de l'écran (50, 64).

9. Dispositif de pulsion d'air selon la revendication précédente, **caractérisé en ce que** le nombre de pattes (62) sur l'écran (50, 64) est égal au nombre de zones de passage (30) sur le stator (14).

10. Dispositif de pulsion d'air selon l'une des revendications 2 à 9, **caractérisé en ce que** ledit écran (50, 64) est fixé sur le stator (14).

11. Dispositif de pulsion d'air selon l'une des revendications précédentes, **caractérisé en ce que** ledit écran est un premier écran (64) formant partie d'une couverture du stator (14) comportant en outre un deuxième écran (66), disposé en couverture du stator du côté axial du stator opposé au côté couvert par ledit premier écran, entre ledit stator et ledit moyen support (10), ledit deuxième écran (66) étant également relié électriquement au moyen support et à la masse électrique.

12. Dispositif de pulsion d'air selon la revendication 11, **caractérisé en ce que** ledit deuxième écran (66) s'étend transversalement à un arbre de sortie moteur (8).

13. Dispositif de pulsion d'air selon la revendication précédente, **caractérisé en ce que** ledit deuxième écran (66) s'étend sur toute la surface du stator (14).

14. Dispositif de pulsion d'air selon l'une des revendications 12 ou 13, **caractérisé en ce que** lesdits moyens de fermeture consistent en des deuxièmes pattes (68) qui prolongent sensiblement perpendiculairement le bord délimitant la périphérie du deuxième écran (66).

15. Dispositif de pulsion d'air selon l'une des revendications 11 à 14, **caractérisé en ce que** ledit deuxième écran (66) est fixé sur le stator (14).

16. Dispositif de pulsion d'air selon la revendication 11, **caractérisé en ce que** ledit deuxième écran (70) s'étend axialement, entre le stator (14) et ledit moyen support (10).

17. Dispositif de pulsion d'air selon la revendication précédente, **caractérisé en ce que** ledit deuxième écran (70) s'étend sensiblement dans le prolongement de la périphérie dudit stator (14).

18. Dispositif de pulsion d'air selon la revendication précédente, **caractérisé en ce que** ledit deuxième écran (70) présente une forme de couronne annulaire.

19. Dispositif de pulsion d'air selon la revendication précédente, **caractérisé en ce que** lesdits moyens de fermeture s'étendent sensiblement axialement dans la continuité de la paroi formant ladite couronne annulaire.

20. Dispositif de pulsion d'air selon l'une des revendications 16 à 19, **caractérisé en ce que** ledit deuxième écran (70) est fixé sur le moyen support (10).

21. Dispositif de pulsion d'air selon l'une des revendications 11 à 20, **caractérisé en ce que** lesdits moyens de fermeture sont portés par le premier écran (64) et par le deuxième écran (66, 70).

22. Dispositif de pulsion d'air selon la revendication précédente, **caractérisé en ce que** lesdits moyens de fermeture portés par le premier écran (64) s'étendent en regard des moyens de fermeture portés par le deuxième écran (66, 70), lesdits moyens de fermeture s'étendant sur une dimension axiale légèrement inférieure à la moitié de la dimension axiale du stator (14).

23. Dispositif de pulsion d'air selon la revendication 21, **caractérisé en ce que** les deux écrans sont agencés par rapport au stator de manière à ce que les zones de passage entre les dents (22) du stator soient comblés alternativement par un moyen de fermeture porté par le premier écran (64) et par un moyen de fermeture porté par le deuxième écran (66, 70), lesdits moyens de fermeture s'étendant sur une dimension axiale sensiblement égale à la dimension axiale du stator.

24. Dispositif de pulsion d'air selon l'une des revendications 11 à 23, **caractérisé en ce que** les deux écrans présentent des moyens de mise à la masse communs.

25. Dispositif de pulsion d'air selon la revendication précédente, **caractérisé en ce que** les moyens de mise à la masse communs sont formés par au moins une vis de fixation (56) traversant le stator (14), au contact d'au moins le deuxième écran et le premier écran, pour venir en prise dans le moyen support.

26. Dispositif de pulsion d'air selon l'une des revendications précédentes, en combinaison avec au moins la revendication 12, **caractérisé en ce que** le premier écran et/ou le deuxième écran sont réalisés en un matériau conducteur électriquement.

27. Dispositif de pulsion d'air selon l'une des revendications précédentes, **caractérisé en ce qu'**un arbre de sortie (8) du moteur est monté à rotation à l'intérieur du moyen support (10) par l'intermédiaire de roulements (46, 48).

28. Dispositif de pulsion d'air selon l'une des revendications précédentes, **caractérisé en ce que** le moyen support (10) comprend au moins une platine (38) qui forme un dissipateur thermique porteur d'une carte électronique de commande (12), notamment de l'alimentation des bobines du stator.

29. Dispositif de pulsion d'air selon l'une des revendications précédentes, **caractérisé en ce que** ledit rotor (16), agencé autour du stator (14), est porteur d'au moins un aimant permanent (36) dont l'interaction avec lesdites bobines alimentées en courant génère un mouvement de rotation du rotor autour du stator.

30. Système de chauffage, de ventilation et/ou de climatisation d'un véhicule automobile comprenant au moins un dispositif de pulsion d'air (1) conforme à au moins l'une quelconque des revendications précédentes.

## Patentansprüche

1. Luftansaug-/-ausblasvorrichtung, die einen Elektromotor (2) mit elektronischer Kommutierung aufweist, wobei der Motor einen Rotor (16) und einen Stator (14) aufweist, wobei der Stator (14) eine Vielzahl von Zähnen (22) aufweist, die radial sternförmig um eine Längsachse angeordnet sind, damit eine Durchgangszone (30) für die Wicklung einer Magnetspule um jeden dieser Zähne zwischen zwei benachbarten Zähnen gebildet wird, wobei der Stator mit einer Trägereinrichtung (10) des Elektromotors in Kontakt ist, wobei der Träger metallisch und elektrisch an eine elektrische Masse angeschlossen ist, und mindestens eine Abschirmung (50, 64, 66, 70) elektrisch mit der Trägereinrichtung (10) verbunden ist, wobei die mindestens eine Abschirmung Schließeinrichtungen (62, 68) aufweist, die sich entlang der Längsachse erstrecken, um mindestens eine der Durchgangszonen zwischen zwei Zähnen des Stators zu füllen, **dadurch gekennzeichnet, dass** die Abschirmung (50, 64) sich quer zur Längsachse zwischen dem Rotor (16) und dem Stator (14) erstreckt.

2. Luftansaug-/-ausblasvorrichtung nach dem vorhergehenden Anspruch, **dadurch gekennzeichnet, dass** die Abschirmung (50, 64) sich über die ganze Fläche des Stators (14) erstreckt.

3. Luftansaug-/-ausblasvorrichtung nach einem der vorhergehenden Ansprüche, **dadurch gekennzeichnet, dass** die Abschirmung (50, 64, 66) eine im Wesentlichen ebene Ringform aufweist.

4. Luftansaug-/-ausblasvorrichtung nach einem der vorhergehenden Ansprüche, **dadurch gekennzeichnet, dass** die Abschirmung in ihrer Mitte eine Bohrung (52) aufweist, um von einer Abtriebswelle (8) des Motors durchquert zu werden.

5. Luftansaug-/-ausblasvorrichtung nach dem vorhergehenden Anspruch, **dadurch gekennzeichnet, dass** ein Lüfterrad (4) fest mit dem freien Ende der Abtriebswelle (8) des Motors verbunden ist, das sich entgegengesetzt zum Stator (14) und zur Trägereinrichtung (10) erstreckt.

6. Luftansaug-/-ausblasvorrichtung nach einem der vorhergehenden Ansprüche, **dadurch gekennzeichnet, dass** die Schließeinrichtungen Laschen (62) aufweisen, die den den Umfang der Abschirmung (50, 64) begrenzenden Rand im Wesentlichen lotrecht verlängern.

7. Luftansaug-/-ausblasvorrichtung nach dem vorhergehenden Anspruch, **dadurch gekennzeichnet, dass** die Laschen (62) sich über eine Höhe im Wesentlichen gleich der Höhe der Durchgangszonen (30) des Stators (14) erstrecken.

8. Luftansaug-/-ausblasvorrichtung nach dem vorhergehenden Anspruch, **dadurch gekennzeichnet, dass** die Laschen (62) gleichmäßig auf dem ganzen Umfang der Abschirmung (50, 64) angeordnet sind.

9. Luftansaug-/-ausblasvorrichtung nach dem vorhergehenden Anspruch, **dadurch gekennzeichnet, dass** die Anzahl von Laschen (62) auf der Abschirmung (50, 64) gleich der Anzahl von Durchgangszonen (30) auf dem Stator (14) ist.

10. Luftansaug-/-ausblasvorrichtung nach einem der Ansprüche 2 bis 9, **dadurch gekennzeichnet, dass** die Abschirmung (50, 64) am Stator (14) befestigt ist.

11. Luftansaug-/-ausblasvorrichtung nach einem der vorhergehenden Ansprüche, **dadurch gekennzeichnet, dass** die Abschirmung eine erste Abschirmung (64) ist, die Teil einer Abdeckung des Stators (14) ist, die außerdem eine zweite Abschirmung (66) aufweist, die in Abdeckung des Stators auf der axialen Seite des Stators entgegengesetzt zur von der ersten Abschirmung bedeckten Seite zwischen dem Stator und der Trägereinrichtung (10) angeordnet ist, wobei die zweite Abschirmung (66) ebenfalls elektrisch mit der Trägereinrichtung und mit der elektrischen Masse verbunden ist.

12. Luftansaug-/-ausblasvorrichtung nach Anspruch 11, **dadurch gekennzeichnet, dass** die zweite Abschirmung (66) sich quer zu einer Abtriebswelle des Motors (8) erstreckt.

13. Luftansaug-/-ausblasvorrichtung nach dem vorhergehenden Anspruch, **dadurch gekennzeichnet, dass** die zweite Abschirmung (66) sich über die ganze Fläche des Stators (14) erstreckt.

14. Luftansaug-/-ausblasvorrichtung nach einem der Ansprüche 12 oder 13, **dadurch gekennzeichnet, dass** die Schließeinrichtungen aus zweiten Laschen (68) bestehen, die den den Umfang der zweiten Abschirmung (66) begrenzenden Rand im Wesentlichen lotrecht verlängern.

15. Luftansaug-/-ausblasvorrichtung nach einem der Ansprüche 11 bis 14, **dadurch gekennzeichnet, dass** die zweite Abschirmung (66) am Stator (14) befestigt ist.

16. Luftansaug-/-ausblasvorrichtung nach Anspruch 11, **dadurch gekennzeichnet, dass** die zweite Abschirmung (70) sich axial zwischen dem Stator (14) und der Trägereinrichtung (10) erstreckt.

17. Luftansaug-/-ausblasvorrichtung nach dem vorhergehenden Anspruch, **dadurch gekennzeichnet, dass** die zweite Abschirmung (70) sich im Wesentlichen in der Verlängerung des Umfangs des Stators (14) erstreckt.

18. Luftansaug-/-ausblasvorrichtung nach dem vorhergehenden Anspruch, **dadurch gekennzeichnet, dass** die zweite Abschirmung (70) die Form eines ringförmigen Kranzes aufweist.

19. Luftansaug-/-ausblasvorrichtung nach dem vorhergehenden Anspruch, **dadurch gekennzeichnet, dass** die Schließeinrichtungen sich im Wesentlichen axial in der Kontinuität der den ringförmigen Kranz bildenden Wand erstrecken.

20. Luftansaug-/-ausblasvorrichtung nach einem der Ansprüche 16 bis 19, **dadurch gekennzeichnet, dass** die zweite Abschirmung (70) an der Trägereinrichtung (10) befestigt ist.

21. Luftansaug-/-ausblasvorrichtung nach einem der Ansprüche 11 bis 20, **dadurch gekennzeichnet, dass** die Schließeinrichtungen von der ersten Abschirmung (64) und von der zweiten Abschirmung (66, 70) getragen werden.

22. Luftansaug-/-ausblasvorrichtung nach dem vorhergehenden Anspruch, **dadurch gekennzeichnet, dass** die von der ersten Abschirmung (64) getragenen Schließeinrichtungen sich gegenüber den von der zweiten Abschirmung (66, 70) getragenen Schließeinrichtungen erstrecken, wobei die Schließeinrichtungen sich über eine axiale Abmessung geringfügig kleiner als die Hälfte der axialen Abmessung des Stators (14) erstrecken.

23. Luftansaug-/-ausblasvorrichtung nach Anspruch 21, **dadurch gekennzeichnet, dass** die zwei Abschirmungen bezüglich des Stators so angeordnet sind, dass die Durchgangszonen zwischen den Zähnen (22) des Stators abwechselnd von einer von der ersten Abschirmung (64) getragenen Schließeinrichtung und von einer von der zweiten Abschirmung (66, 70) getragenen Schließeinrichtung gefüllt werden, wobei die Schließeinrichtungen sich über eine axiale Abmessung im Wesentlichen gleich der axialen Abmessung des Stators erstrecken.

24. Luftansaug-/-ausblasvorrichtung nach einem der Ansprüche 11 bis 23, **dadurch gekennzeichnet, dass** die zwei Abschirmungen gemeinsame Erdungseinrichtungen aufweisen.

25. Luftansaug-/-ausblasvorrichtung nach dem vorhergehenden Anspruch, **dadurch gekennzeichnet, dass** die gemeinsamen Erdungseinrichtungen von mindestens einer Befestigungsschraube (56) gebildet werden, die den Stator (14) in Kontakt mit mindestens der zweiten Abschirmung und der ersten Abschirmung durchquert, um in der Trägereinrichtung in Eingriff zu kommen.

26. Luftansaug-/-ausblasvorrichtung nach einem der vorhergehenden Ansprüche, in Kombination mit mindestens Anspruch 12, **dadurch gekennzeichnet, dass** die erste Abschirmung und/oder die zweite Abschirmung aus einem elektrisch leitenden Material hergestellt sind.

27. Luftansaug-/-ausblasvorrichtung nach einem der vorhergehenden Ansprüche, **dadurch gekennzeichnet, dass** eine Abtriebswelle (8) des Motors mit Hilfe von Lagern (46, 48) drehbar ins Innere der Trägereinrichtung (10) eingebaut ist.

28. Luftansaug-/-ausblasvorrichtung nach einem der vorhergehenden Ansprüche, **dadurch gekennzeichnet, dass** die Trägereinrichtung (10) mindestens eine Platte (38) enthält, die einen eine elektronische Steuerkarte (12), insbesondere der Stromversorgung der Spulen des Stators, tragenden Wärmeableiter bildet.

29. Luftansaug-/-ausblasvorrichtung nach einem der vorhergehenden Ansprüche, **dadurch gekennzeichnet, dass** der um den Stator (14) herum angeordnete Rotor (16) mindestens einen Dauermagnet (36) trägt, dessen Interaktion mit den mit Strom versorgten Spulen eine Drehbewegung des Rotors um den Stator herum erzeugt.

30. Heizungs-, Lüftungs- und/oder Klimaanlage eines Kraftfahrzeugs, die mindestens eine Luftansaug-/- ausblasvorrichtung (1) gemäß mindestens einem der vorhergehenden Ansprüche enthält.

## Claims

1. Air pulsation device comprising an electronic-switching electric motor (2), the said motor comprising a rotor (16) and a stator (14),
wherein the said stator (14) has a plurality of teeth (22) arranged radially in star-like manner around a longitudinal axis so that an interspace (30) for winding a magnetic coil around each of the teeth is formed between two adjacent teeth,
the stator is in contact with a means (10) for supporting the electric motor, the said support means being metallic and electrically connected to an electrical earth, and
at least one screen (50, 64, 66, 70) is electrically connected to the support means (10), the said at least one screen comprising closing means (62, 68) which extend along the longitudinal axis so as to fill at least one of the said interspaces between two teeth of the stator,
**characterized in that**: the said screen (50, 64) extends transversely relative to the longitudinal axis between the rotor (16) and the stator (14).

2. Air pulsation device according to the preceding claim, **characterized in that** the said screen (50, 64) extends over the entire surface of the stator (14).

3. Air pulsation device according to either of the preceding claims, **characterized in that** the said screen (50, 64, 66) has a substantially flat annular form.

4. Air pulsation device according to one of the preceding claims, **characterized in that** the screen is provided in the centre with a bore-hole (52) so that it can be passed through by an output shaft (8) of the motor.

5. Air pulsation device according to the preceding claim, **characterized in that** a ventilation wheel (4) is rigidly connected to the free end of the output shaft (8) of the motor which extends on the opposite side to the stator (14) and the support means (10).

6. Air pulsation device according to one of the preceding claims, **characterized in that** the said closing means comprise legs (62) extending substantially perpendicularly from the edge defining the periphery of the said screen (50, 64).

7. Air pulsation device according to the preceding claim, **characterized in that** the legs (62) extend over a height substantially equal to the height of the interspaces (30) of the stator (14).

8. Air pulsation device according to the preceding claim, **characterized in that** the legs (62) are uniformly arranged along the entire circumference of the screen (50, 64).

9. Air pulsation device according to the preceding claim, **characterized in that** the number of legs (62) on the screen (50, 64) is equal to the number of interspaces (30) on the stator (14) .

10. Air pulsation device according to one of Claims 2 to 9, **characterized in that** the said screen (50, 64) is fixed on the stator (14).

11. Air pulsation device according to one of the preceding claims, **characterized in that** the said screen is a first screen (64) forming part of a cover of the stator (14) further comprising a second screen (66) arranged to cover the stator on the axial side of the stator opposite to the side covered by the said first screen, between the said stator and the support means (10), the said second screen (66) being also electrically connected to the support means and to the electrical earth.

12. Air pulsation device according to Claim 11, **characterized in that** the said second screen (66) extends transversely relative to a motor output shaft (8).

13. Air pulsation device according to the preceding claim, **characterized in that** the said second screen (66) extends over the entire surface of the stator (14).

14. Air pulsation device according to one of Claims 12 or 13, **characterized in that** the said closing means consist of second legs (68) extending substantially perpendicularly from the edge defining the periphery of the second screen (66).

15. Air pulsation device according to one of Claims 11 to 14, **characterized in that** the said second screen (66) is fixed on the stator (14).

16. Air pulsation device according to Claim 11, **characterized in that** the said second screen (70) extends axially, between the stator (14) and the said support means (10).

17. Air pulsation device according to the preceding claim, **characterized in that** the said second screen (70) extends substantially as a continuation of the periphery of the stator (14).

18. Air pulsation device according to the preceding claim, **characterized in that** the said second screen (70) has the form of an annular rim.

19. Air pulsation device according to the preceding claim, **characterized in that** the said closing means extend substantially axially as a continuation of the wall forming the said annular rim.

20. Air pulsation device according to one of Claims 16 to 19, **characterized in that** the said second screen (70) is fixed on the support means (10).

21. Air pulsation device according to one of Claims 11 to 20, **characterized in that** the said closing means are mounted on the first screen (64) and on the second screen (66, 70).

22. Air pulsation device according to the preceding claim, **characterized in that** the said closing means mounted on the first screen (64) extend facing closing means mounted on the second screen (66, 70), the said closing means extending over an axial dimension slightly smaller than half the axial dimension of the stator (14).

23. Air pulsation device according to Claim 21, **characterized in that** the two screens are arranged in relation to the stator in such a way that the interspaces between the teeth (22) of the stator are filled alternately by a closing means mounted on the first screen (64) and by a closing means mounted on the second screen (66, 70), the said closing means extending over an axial extension substantially equal to the axial dimension of the stator.

24. Air pulsation device according to one of Claims 11 to 23, **characterized in that** the two screens have common earthing means.

25. Air pulsation device according to the preceding claim, **characterized in that** the common earthing means are formed by at least one fixing screw (56) passing through the stator (14), in contact with at least the second screen and the first screen, so as to engage in the support means.

26. Air pulsation device according to one of the preceding claims, in combination with at least Claim 12, **characterized in that** the first screen and/or the second screen are made of an electrically conductive material.

27. Air pulsation device according to one of the preceding claims, **characterized in that** an output shaft (8) of the motor is rotationally mounted inside the support means (10) by means of bearings (46, 48).

28. Air pulsation device according to one of the preceding claims, **characterized in that** the support means (10) comprises at least one plate (38) which forms a heat dissipator provided with an electronic control board (12), in particular for controlling energization of the stator coils.

29. Air pulsation device according to one of the preceding claims, **characterized in that** the said rotor (16), which is arranged around the stator (14), has at least one permanent magnet (36), the interaction of which with the said coils supplied with current produces a rotational movement of the rotor around the stator.

30. Heating, ventilation and/or air-conditioning system for a motor vehicle, comprising at least one air pulsation device (1) in accordance with at least any one of the preceding claims.
